# EUROPÄISCHE PATENTSCHRIFT

(11) **EP 3 106 055 B1**
(45) Veröffentlichungstag und Bekanntmachung des Hinweises auf die Patenterteilung: **23.05.2018**
(21) Anmeldenummer: 15172182.6
(22) Anmeldetag: 15.06.2015
(51) Int. Cl.: A45C 13/42, A45C 15/00

(54) **GEPÄCKSTÜCK**
PIECE OF LUGGAGE
BAGAGE

(43) Veröffentlichungstag der Anmeldung: 21.12.2016
(73) Patentinhaber: RIMOWA ELECTRONIC TAG GmbH, 20354 Hamburg (DE)
(72) Erfinder: Reh, Jan, 20354 Hamburg (DE); Morszeck, Dieter, 50829 Köln (DE)
(74) Vertreter: dompatent von Kreisler Selting Werner - Partnerschaft von Patent- und Rechtsanwälten mbB

(56) Entgegenhaltungen:
- EP-A1- 2 737 820
- WO-A1-2012/152745
- US-A1- 2006 163 303
- US-A1- 2010 018 088

## Beschreibung

Die Erfindung betrifft ein Gepäckstück nach dem Oberbegriff des Anspruchs 1 und ein Verfahren zum Betreiben einer Displayeinrichtung eines Gepäckstücks nach Anspruch 14.

Bei den bisher bekannten Gepäckstück, die für einen Flug in einem Flughafen eingecheckt werden, werden Papieranhänger, sogenannte baggage tags an das Gepäckstück geklebt, die für einen Flug notwendigen Flug- und Personendaten, insbesondere Beförderungswege und Identifikationsmerkmale anzeigen. Neuerdings gibt es auch Bestrebungen, sogenannte elektronische baggage tags vorzusehen. Dabei werden als elektronische baggage tags ausgeführte Anhänger an das Gepäckstück gehängt, die ein Display beinhalten.

Ein elektronischer baggage tag mit zwei Displays in einer Kartenform ist aus der WO 2012/152745 A1 bekannt, wobei diese Kartenform eine Breite von 54 mm aufweist. Es besteht zunehmend Bedarf, mehr Informationen auf diesen elektronischen baggage tags anzuzeigen und die Scannbarkeit der baggage tags zu verbessern. Aufgabe der vorliegenden Erfindung ist es daher, ein Gepäckstück mit einer Anzeigefläche für Flug- und Personendaten zu schaffen, bei dem mehr Informationen auf der Anzeigefläche angezeigt werden können und bei der die Scanbarkeit erhöht wird.

Zur Lösung dieser Aufgabe dienen die Merkmale der Ansprüche 1 und 14.

Die Erfindung sieht in vorteilhafter Weise vor, dass die Anzeigefläche eine Länge zwischen 160 und 200 mm und eine Breite zwischen 38 und 60 mm aufweist. Auf diese Weise können alle für den Flug notwendigen Flug- und Personendaten so dargestellt werden, dass diese auch besonders gut scannbar sind.

Die in den Gepäckstückkörper integrierte Displayeinrichtung kann vorzugsweise eine Länge zwischen 160 und 300 mm und eine Breite von 38 und 90 mm aufweisen.

Der Gepäckstückkörper kann zwei Längsseiten, zwei Hauptseiten sowie eine Ober- und eine Unterseite aufweisen, wobei die Anzeigefläche parallel zu einer der Längs- oder Hauptseiten oder der Ober- oder Unterseite angeordnet ist, wobei die Anzeigefläche gegenüber der Längs- oder Hauptseite oder Ober- oder Unterseite vertieft und in dem Gepäckstückkörper angeordnet ist. Auf diese Weise ist die Anzeigefläche besonders gut vor äußeren Einwirkungen geschützt und die Bruchgefahr ist reduziert.

Auf der Anzeigefläche können zwei Strichcodes mit unterschiedlicher Ausrichtung anzeigbar sein. In unterschiedlicher Ausrichtung bedeutet, dass die Striche der Strichcodes in unterschiedlichen Richtungen weisen. Vorzugsweise weisen die unterschiedlich ausgerichteten Strichcodes in Richtungen, die 90 Grad zueinander versetzt sind. Aufgrund der beanspruchten Größe der Anzeigefläche können neben weiteren notwendigen Flug- und Personendaten zwei Strichcodes mit unterschiedlicher Ausrichtung dargestellt werden. Auf diese Weise kann die Scannbarkeit der auf der Anzeigefläche dargestellten Flug- und Personendaten deutlich erhöht werden.

Die Strichcodes können in Längsrichtung der Anzeigefläche nebeneinander angezeigbar sein.

Die Displayeinrichtung kann in einem einer Wanne ähnlichen Aufnahmeelement angeordnet sein. Dadurch wird die Bruchgefahr der Displayeinrichtung deutlich reduziert.

Die Displayeinrichtung kann eine Dicke zwischen 7 mm und 40 mm aufweisen.

Die Displayeinrichtung kann an einer der Längsseiten des Gepäckstückkörpers angeordnet seien. Insbesondere kann die Längsrichtung der Anzeigefläche in Längsrichtung der Längsseite angeordnet sein. In diesem Bereich ist die Displayeinrichtung besonders sicher angeordnet.

Die Displayeinrichtung kann ein stromloses Display aufweisen. Das stromlose Display kann vorzugsweise ein bi-stabiles Display sein. Ein stromloses Display ist ein Display, das die Daten dauerhaft ohne Stromzufuhr anzeigen kann. Es wird lediglich Strom für das Ändern der Anzeige benötigt. Solche Displays werden auch bi-stabile Displays genannt. Für die Versorgung des Displays mit Strom für das Ändern der Anzeige kann zumindest eine Batterie vorgesehen sein.

Die Displayeinrichtung kann ein Gehäuse, eine Schutzschicht sowie ein Display aufweisen, wobei das Display im Inneren des Gehäuses angeordnet ist und durch die Schutzschicht geschützt ist.

Auf der Displayeinrichtung können zwei zueinander mit gegenseitigem Abstand parallele grüne Streifen in definierten Abschnitten auf der Anzeigefläche anzeigbar sein.

Auf diese Weise kann ein Gepäckstück geschaffen werden, das eine als elektronischer tag ausgeführte Displayeinrichtung aufweist, die auch für innereuropäische Flüge als Anzeige für Flug- und Personendaten geeignet ist.

Gemäß der vorliegenden Erfindung können die zusätzlichen Informationen dargestellt werden, ob es sich um einen innereuropäischen oder außereuropäischen Flug handelt.

Grüne Farbe und/oder grünes Material kann auf oder in dem Display und/oder auf oder in der Schutzschicht angeordnet sein, wobei die Displayeinrichtung einen ersten und einen zweiten Betriebszustand aufweist, wobei in dem ersten Betriebszustand die grünen Streifen sichtbar und in dem zweiten Betriebszustand die grünen Streifen nicht sichtbar sind.

Die grünen Streifen können jeweils eine derartige Länge aufweisen, dass sie nicht in dem Bereichen angeordnet sein können, in dem die Strichcodes auf der Anzeigefläche dargestellt sind.

Die Schutzschicht kann vorzugsweise eine durchsichtige Schutzschicht sein, die auf dem Display angeordnet ist. Durchsichtig bedeutet im vorliegenden Fall, dass die Schutzschicht eine solche Transparenz aufweist, dass die Anzeige des darunter angeordneten Displays noch als scharfe Abbildung erkennbar ist. Das Material der durchsichtigen Schutzschicht muss somit für Strahlung des sichtbaren Spektrums weitgehend durchlässig sein.

Die Schutzschicht kann aus Glas oder Kunststoff bestehen.

In dem ersten Betriebszustand kann das Display der Displayeinrichtung in dem Bereich der Anzeigefläche, in dem die grünen Streifen anzeigbar sind, weiß anzeigen, so dass die grüne Farbe und/oder das grüne Material, die bzw. das in dem Bereich der grünen Streifen angeordnet ist, sichtbar ist.

In dem zweiten Betriebszustand kann das Display der Displayeinrichtung in dem Bereich der Anzeigefläche, in dem die grünen Streifen anzeigbar sind, schwarz anzeigen, so dass die grüne Farbe und/oder das grüne Material, die bzw. das in dem Bereich der grünen Streifen angeordnet ist, nicht sichtbar ist.

Die grünen Streifen können jeweils eine Breite von mindestens 5 mm aufweisen.

Die Flug- und Personendaten können Beförderungswege und Identifikationsmerkmale beinhalten, wobei die grünen Streifen jeweils eine derartige Länge aufweisen, dass sie mindestens in den Bereichen für die Angabe des Beförderungsweges und der Identifikationsmerkmale positionierbar sind.

Gemäß der vorliegenden Erfindung kann ferner ein Verfahren zum Betreiben einer Displayeinrichtung eines Gepäckstücks vorgesehen sein, das ein Gepäckstückkörper und eine in dem Gepäckstückkörper integrierte, als elektronischer tag ausgeführte Displayeinrichtung aufweist, wobei auf einer Anzeigefläche der Displayeinrichtung für einen Flug notwendige Flug- und Personendaten angezeigt werden können. Es ist in vorteilhafter Weise vorgesehen, dass die Anzeigefläche in Längsrichtung eine Länge zwischen 160 und 200 mm und in Querrichtung eine Breite zwischen 38 und 600 mm aufweist, wobei zwei Strichcodes in unterschiedlicher Ausrichtung auf der Anzeigefläche angezeigt werden können. Die zwei Strichcodes werden vorzugsweise in Längsrichtung nebeneinander auf der Anzeigefläche angezeigt.

Es ist ferner in vorteilhafter Weise vorgesehen, dass in einem ersten Betriebszustand grüne Streifen in der Anzeigefläche der Displayeinrichtung angezeigt werden und in einem zweiten Betriebszustand keine grünen Streifen in der Anzeigefläche der Displayeinrichtung angezeigt werden.

In dem ersten Betriebszustand kann auf dem Display der Displayeinrichtung in dem Bereich, der dem Bereich der grünen Streifen auf der Anzeigefläche der Displayeinrichtung entspricht, weiß angezeigt werden, so dass grüne Streifen auf der Anzeigefläche der Displayeinrichtung sichtbar werden.

In dem zweiten Betriebszustand kann auf dem Display der Displayeinrichtung in dem Bereich, der dem Bereich für die grünen Streifen auf der Anzeigefläche der Displayeinrichtung entspricht, schwarz angezeigt werden, so dass die grünen Streifen auf der Anzeigefläche der Displayeinrichtung nicht sichtbar werden.

Die grünen Streifen können in einer Breite von mindestens 5 mm an den Längskanten der Anzeigefläche der Displayeinrichtung angezeigt werden, wobei die grünen Streifen in Längsrichtung entlang der Längskante nur mindestens in den Bereichen angezeigt werden, die für die Angabe der Beförderungswege Identifikationsmerkmale vorgesehen sind.

Im Folgenden werden unter Bezugnahme auf die Zeichnungen Ausführungsbeispiele der Erfindung näher erläutert:
- Fig. 1: ein Gepäckstück gemäß der vorliegenden Erfindung,
- Fig. 2: eine Draufsicht auf die Displayeinrichtung,
- Fig. 3: eine Seitenansicht auf die Displayeinrichtung aus Fig. 2,
- Fig. 4: eine Draufsicht auf das Display der Displayeinrichtung,
- Fig. 5: eine Draufsicht auf eine Displayeinrichtung, die im Gepäckstückkörper integriert ist,
- Fig. 6: eine Explosionsdarstellung einer Displayeinrichtung,
- Fig. 7: eine Displayeinrichtung mit Aufnahmeelement,
- Fig. 8: das Aufnahmeelement aus Fig. 7 mit eingesetzter Displayeinrichtung,
- Fig. 9 - Fig. 12: Verfahrensschritte zum Einsetzen der Displayeinrichtung in den Gepäckstückkörper.

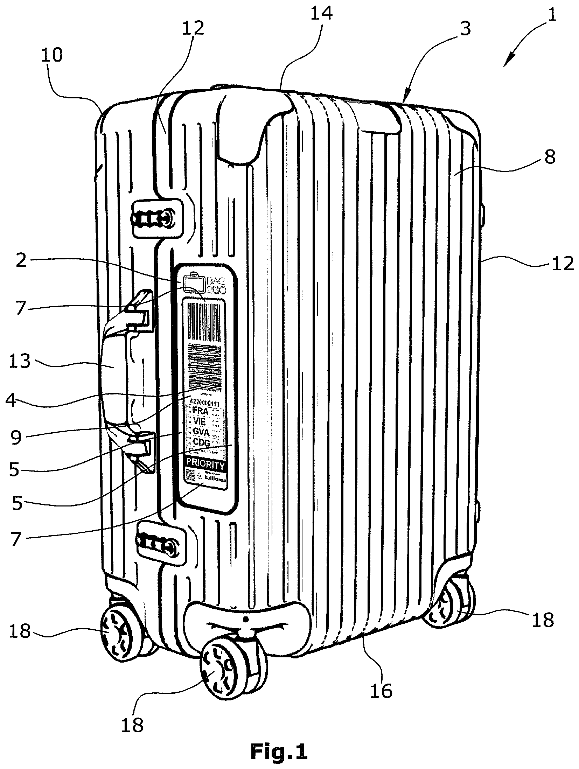

Fig. 1 zeigt ein Gepäckstück 1 gemäß der vorliegenden Erfindung. Das Gepäckstück 1 ist vorzugsweise, wie im dargestellten Ausführungsbeispiel, ein Koffer. Das Gepäckstück 1 weist einen Gepäckstückkörper 3 auf. In dem Gepäckstückkörper 3 ist eine integrierte als elektronischer tag ausgeführte Displayeinrichtung 2 angeordnet. Die Displayeinrichtung 2 weist eine vorzugsweise quadratische Anzeigefläche 4 mit vorzugsweise zwei Längskanten 5 und vorzugsweise zwei Querkanten 7 auf. Auf der Anzeigefläche 4 sind für einen Flug notwendige Flug- und Personendaten 22, 24, 26, 28, 29, insbesondere Beförderungswege und Identifikationsmerkmale 24, 29, anzeigbar.

Das als Koffer aufgeführte Gepäckstück 1 weist einen Gepäckstückkörper 3 auf. Der Gepäckstückkörper 3 besteht aus einer ersten und einer zweiten Kofferschale 10, 12. Der Gepäckstückkörper 3 weist eine Hauptfläche 8, zwei Längsseiten 12, eine Oberseite 14 und eine Unterseite 16 auf. An der Unterseite 16 ist vorzugsweise an den Ecken jeweils eine Rolle 18 angeordnet. Es sind vorzugsweise vier Rollen 18 an der Unterseite 16 angeordnet. Mittels der Rollen 18 kann das Gepäckstück 1 über einen Boden gerollt werden.

Die integrierte Displayeinrichtung 2 ist vorzugsweise an einer der Längsseiten 12 angeordnet. Die Displayeinrichtung 2 ist vorzugsweise an der Längsseite 12 angeordnet, an der auch ein Griffelement 13 angeordnet ist. Dies hat den Vorteil, dass die Flug- und Personendaten 22, 24, 26, die auf der Anzeigefläche 4 der Displayeinrichtung 2 anzeigbar sind, in dem Bereich des Handgriffs 13 angeordnet sind. Es ist bisher üblich an diesem Handgriff 13 den bisher verwendeten Papier baggage tag anzubringen. Für das Flughafenpersonal und auch für die Scanner der Beförderungseinrichtung für Gepäckstücke in Flughäfen ist es vorteilhaft, dass der elektronische tag somit an der bisher bekannten Stelle angebracht ist, so dass der Verfahrensablauf der Gepäckbeförderung an Flughäfen nicht umgestellt werden muss.

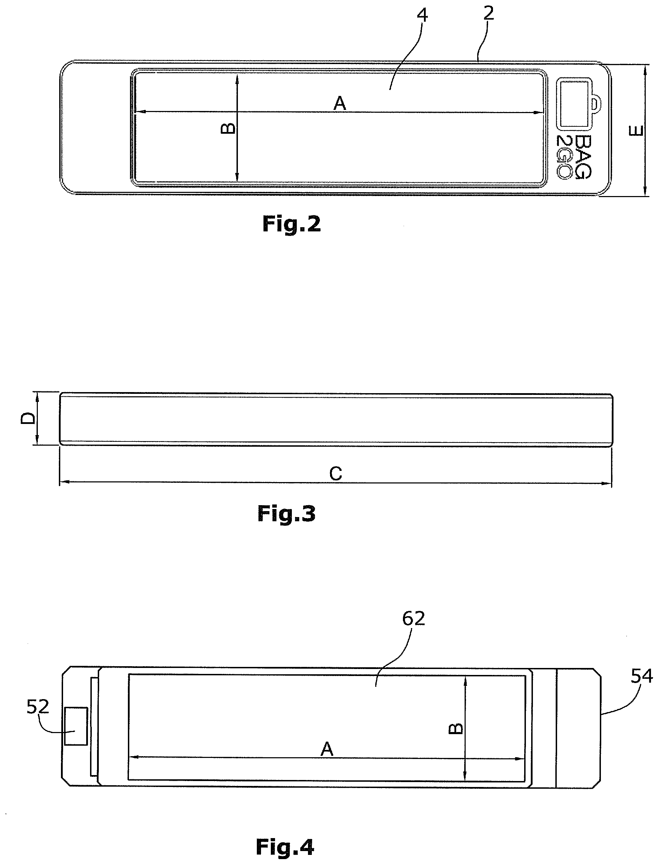

Fig. 2 zeigt die Draufsicht auf die Displayeinrichtung 2. Die Displayeinrichtung 2 weist ein Gehäuse 44 und eine Anzeigefläche 4 auf. Die Anzeigefläche 4 weist in Längsrichtung eine Länge A auf, die zwischen 160 und 200 mm beträgt. Die Anzeigefläche 4 weist ferner eine Breite B auf, die zwischen 38 und 90 mm beträgt. Die Displayeinrichtung 2 selbst weist eine Länge C und eine Breite E auf. Die Länge C weist vorzugsweise eine Länge zwischen 160 und 300 mm auf, wohingegen die Breite D der Displayeinrichtung eine Breite von vorzugsweise 38 bis 90 mm aufweist. Die Dicke D der Displayeinrichtung ist in Fig. 3 dargestellt und beträgt vorzugsweise zwischen 7 und 30 mm. Die Dicke D ist derart dimensioniert, dass als Batterien gängige AA-Batterien verwendet werden können.

In Fig. 4 ist die Draufsicht auf das Display 62 der Displayeinrichtung 2 dargestellt. Das Display 62 weist eine Anzeigefläche 4 auf. Neben der Anzeigefläche 4 ist bei der Displayeinrichtung 2 jeweils Platz für Sensoren 52 und 54 angeordnet, so dass die Sensoren 52 und 54 an der Oberfläche der Displayeinrichtung 2 angeordnet werden können. Die Sensoren 52 und 54 können Bluetooth oder RFID-Chips sein. Das Gehäuse 44 kann vorzugsweise aus Kunststoff gebildet sein, so dass die Sensoren, die an der Oberfläche der Displayeinrichtung 2 angeordnet sind, guten Empfang haben.

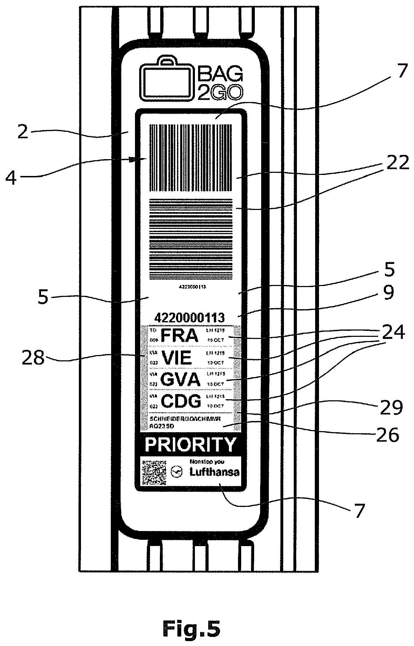

In Fig. 5 ist ein Ausschnitt des Gepäckstücks 1 auf die Displayeinrichtung 2 dargestellt. Auf der Anzeigefläche 4 der Displayeinrichtung 2 sind die für den Flug notwendige Flug- und Personendaten 22, 24, 26, 28 und 29 dargestellt. Auf der Anzeigefläche 4 sind zwei Strichcodes 22 mit unterschiedlicher Ausrichtung angezeigt. Mit unterschiedlicher Ausrichtung bedeutet, dass die Linien der Strichcodes in unterschiedlichen Richtungen weisen. Im dargestellten Ausführungsbeispiel weisen die Linien der Strichcodes in Richtungen, die um 90 Grad zueinander versetzt sind. Aufgrund der Länge der Anzeigefläche zwischen 160 und 200 mm und der Breite zwischen 38 und 60 mm können die beiden Strichcodes mit unterschiedlicher Ausrichtung in ausreichender Größe neben den anderen für den Flug notwendigen Flug- und Personendaten 24, 26, 28 und 29 dargestellt werden. In ausreichender Größe bedeutet, dass Scanautomaten, die an Flughäfen für die Gepäckbeförderung vorgesehen sind, die Strichcodes mit mindestens 90 prozentiger Erfolgsquote scannen können. Dadurch, dass die Strichcodes unterschiedliche Ausrichtung aufweisen, können diese Strichcodes von allen Scanautomaten, egal wie das Gepäckstück zu diesen angeordnet ist, gescannt werden. Die beiden Strichcodes beinhalten vorzugsweise die identischen Daten. Das heißt, wenn diese ausgelesen werden, werden bei beiden Strichcodes vorzugsweise identische Daten ausgelesen.

In Fig. 5 ist deutlich zu erkennen, dass auf der Displayeinrichtung zwei mit gegenseitigem Abstand parallele grüne Streifen 28, 29 auf der Anzeigefläche 4, insbesondere an den Längskanten 5, anzeigbar sind. Die Flug- und Personendaten 22, 24, 26 beinhalten insbesondere Beförderungswege 24 und Identifikationsmerkmale 26.

Die grünen Streifen weisen vorzugsweise eine derartige Länge auf, dass sie mindestens in den Bereichen für die Angabe der Beförderungswege 24 und Identifikationsmerkmale 26 positionierbar sind. Die grünen Streifen werden vorzugsweise nicht in den Bereichen angeordnet, in denen die Strichcodes 22 angeordnet sind. Die grünen Streifen 28, 29 weisen vorzugsweise eine Breite von mindestens 5 mm auf.

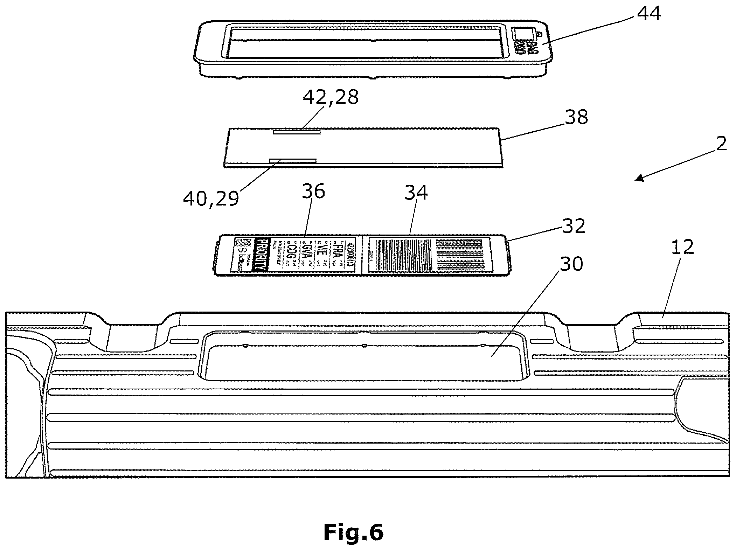

In Fig. 6 ist die Displayeinrichtung 2 näher dargestellt. Aus Fig. 6 kann entnommen werden, dass die Displayeinrichtung 2 mindestens ein Display 32 und mindestens eine durchsichtige Schutzschicht 38 aufweist. Das Display 32 ist vorzugsweise als stromloses Display ausgebildet. Die Displayeinrichtung 2 kann, wie im vorliegenden Ausführungsbeispiel, ferner das Gehäuse 44 aufweisen. Die Displayeinrichtung 2 kann, wie im vorliegenden Ausführungsbeispiel, in einem einer Wanne ähnlichen Aufnahmeelement 30 in dem Gepäckstückkörper 3 angeordnet sein. Die Displayeinrichtung 2 kann ferner mehrere durchsichtige Schutzschichten 38 aufweisen.

Im vorliegenden Ausführungsbeispiel ist die durchsichtige Schutzschicht 38 auf der Seite des Displays 32 angeordnet, auf der die Anzeigebereiche 34,36 angeordnet sind. Im vorliegenden Ausführungsbeispiel weist das Display 32 einen ersten und einen zweiten Anzeigebereich 34, 36 auf. Im vorliegenden Ausführungsbeispiel ist grüne Farbe und/oder grünes Material 42, 40 auf der Schutzschicht 38 in dem Bereich angeordnet, der dem Bereich entspricht, in dem die grünen Streifen 28, 29 auf der Anzeigefläche 4 anzeigbar sind.

Die grüne Farbe kann auf der Schutzschicht auf der Seite, die dem Display 32 zugewandt ist und/oder auf der Seite, die dem Gehäuse 44 zugewandt ist angeordnet sein. Alternativ kann grüne Farbe auch in der Schutzschicht 38 eingebracht sein. Alternativ kann auch grünes Material auf oder in der Schutzschicht 38 eingebracht sein. Grünes Material kann beispielsweise auch ein grüner Klebestreifen sein, der auf der Schutzschicht 38 aufgebracht ist. Alternativ kann grüne Farbe und/oder grünes Material auch auf oder in dem Display 32 in dem Bereich angeordnet sein, der dem Bereich entspricht, in dem die grünen Streifen 28, 29 auf der Anzeigefläche 4 anzeigbar sind. Die grüne Farbe und/oder das grüne Material müssen lediglich derart angeordnet sein, dass das Display 32 noch darunter weiß oder schwarz anzeigen kann. Unten ist im vorliegenden Fall immer die Richtung in Richtung des Gepäckstückkörpers und oben ist im vorliegenden Fall immer die Richtung von dem Gepäckstückkörper weg.

Die Displayeinrichtung 2 kann einen ersten und einen zweiten Betriebszustand aufweisen, wobei im ersten Betriebszustand die grünen Streifen 28, 29 sichtbar und in dem zweiten Betriebszustand die grünen Streifen 28, 29 nicht sichtbar sind.

In dem ersten Betriebszustand zeigt das Display 32 der Displayeinrichtung 2 in dem Bereich der Anzeigefläche, in dem die grünen Streifen 28, 29 sichtbar sind, Weiß an. In diesem Fall wird die grüne Farbe und/oder das grüne Material 40, 42, die bzw. das in dem Bereich der grünen Streifen 28, 29, angeordnet ist, sichtbar. Auf diese Weise sind die grünen Streifen 28, 29 in der Anzeigefläche 4 dargestellt. Weiß bedeutet, lediglich eine helle Farbe.

In einem zweiten Betriebszustand kann das Display 32 der Displayeinrichtung in dem Bereich der Anzeigefläche 4, in dem die grünen Streifen 28, 29 anzeigbar sind, Schwarz anzeigen. Die grüne Farbe und/oder das grüne Material 40, 42 die bzw. das in dem Bereich der grünen Streifen 28, 29 angeordnet ist, wird in diesem Fall nicht sichtbar. In der Anzeigefläche 4 werden im zweiten Betriebszustand lediglich schwarze Balken und keine grüne Streifen 28, 29 angezeigt. Schwarz bedeutet, lediglich eine dunkle Farbe.

Das Display 32 kann mittels einer nicht dargestellten Batterie oder eines nicht dargestellten Akkus betrieben werden. Diese Batterie oder der Akku können ebenfalls in der Vertiefung 30 in dem Gepäckstückkörper 3 angeordnet sein. Alternativ können diese auch innerhalb des Gepäckstückkörpers 3 angeordnet sein und lediglich mit der Displayeinrichtung 32 verbunden sein.

Das Display 32 kann aus Kunststoff bestehen, so dass es flexibel ist. Die Schutzschicht 38 kann aus Glas und/oder aus Kunststoff bestehen.

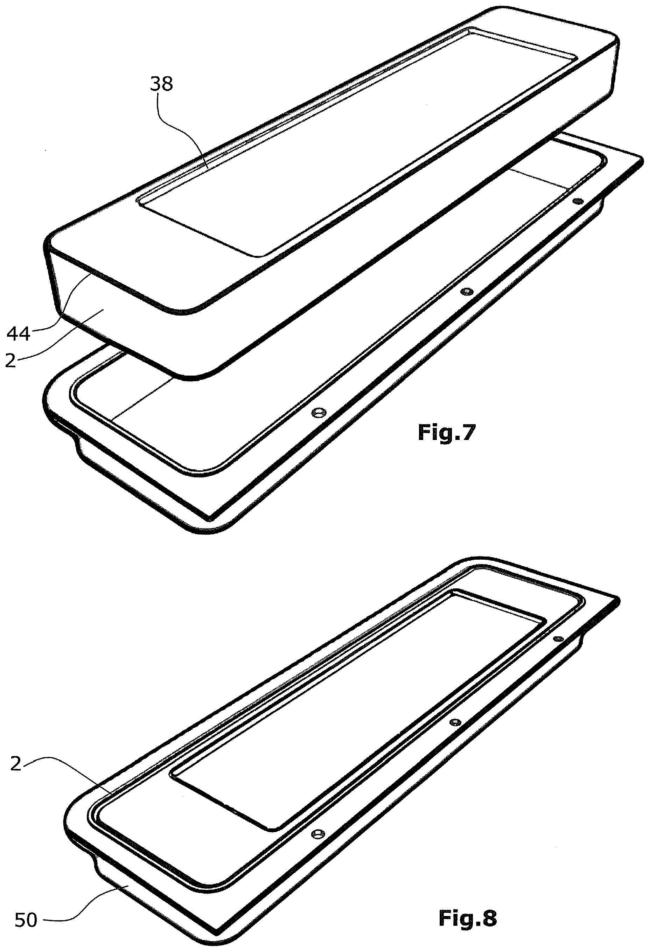

Fig. 7 zeigt die Displayeinrichtung 2 und ein Aufnahmeelement 50. Anders als in Fig. 6, bei das Aufnahmeelement 30 in den Gepäckstückkörper tiefgezogen ist, ist das in Fig. 7 dargestellte Aufnahmeelement 50 ein separates Bauteil. Dieses einer Wanne ähnliche Aufnahmeelement 50 kann vorzugsweise aus Kunststoff hergestellt werden.

Alternativ kann das Aufnahmeelement 50 jedoch aus jeglichem anderem Material hergestellt sein. Die Displayeinrichtung 2 weist ein Gehäuse 44 und eine Schutzschicht 38 auf. Innerhalb eines Gehäuses 44 ist ein Display angeordnet. Das Gehäuse 44 und die Schutzschicht 38 schützen das im Inneren angeordnete Display vor Stößen, wie Biegung, Wasser und Staub. Das Gehäuse 44 und die Schutzschicht 38 können ein geschlossenes System bilden. Dies hat den Vorteil, dass Manipulationen an einem Display nur sehr schwer vorgenommen werden können.

Die Displayeinrichtung 2 kann in dem Aufnahmeelement 50 angeordnet werden. Die Displayeinrichtung 2 kann dabei derart in dem Aufnahmeelement aufgenommen werden, das die Displayeinrichtung 2 leicht vertieft in dem Aufnahmeelement 50 angeordnet ist, so dass die Displayeinrichtung 2 besser vor äußeren Einflüssen geschützt ist.

In Fig. 8 ist das Aufnahmeelement 50 aus Fig. 7 mit der darin angeordneten Displayeinrichtung 2 dargestellt.

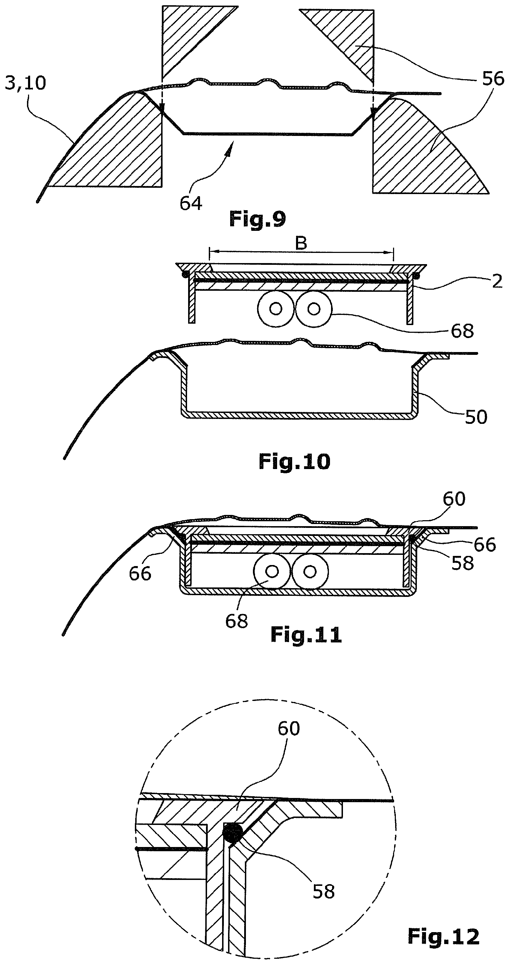

In den Fign. 9 bis 12 sind verschiedene Verfahrensschritte dargestellt, bei denen ein Aufnahmeelement 50 mit der ersten oder der zweiten Kofferschale 10 des Gepäckstückkörpers 3 verbunden werden kann. In Fig. 9 ist eine Kofferschale 10 dargestellt, die einem tiefgezogenen Bereich 64 aufweist. Dieser tiefgezogene Bereich 64 wird mittels Stanzwerkzeugen 56 ausgestanzt.

Ein Aufnahmeelement 50, das das Aufnahmeelement aus den Fign. 7 und 8 ähnlich ist, wird, wie in Fig. 10 dargestellt ist, von unten mit der Kofferschale 10 verbunden, vorzugsweise verklebt. Das Aufnahmeelement 50 weist dafür abstehende Kannten 66 auf. Displayeinrichtung 2 wird dann von oben in das Aufnahmeelement 50 eingesetzt. Die Displayeinrichtung 2 kann von unten durch das Aufnahmeelement 50 mit dem Aufnahmeelement 50 verschraubt werden. Bei der Verschraubung wird ein umlaufender Rand der Displayeinrichtung 2 gegen die Kofferschale 10 gepresst. Dabei wird eine an dem umlaufenden Rand der Displayeinrichtung 2 angeordnete Dichtung 58 an die Kofferschale gepresst und somit wird die Displayeinrichtung abgedichtet.

Das Aufnahmeelement 50 kann von unten ein Fach aufweisen, dass geöffnet werden kann um die Batterien 68 einzusetzen. Ferner kann auch eine Aussparung in dem Aufnahmeelement 50 vorgesehen sein, um eine mechanische Betätigungseinrichtung an der Displayeinrichtung 2 zu betätigen. Dies kann beispielsweise ein Knopf an der Displayeinrichtung 2 sein. Diese Betätigungseinrichtung kann betätigt werden, um die Displayeinrichtung zu aktivieren, um Flug- und Personendaten auf die Displayeinrichtung zu übertragen.

## Patentansprüche

1. Gepäckstück (1), mit
- einem Gepäckstückkörper (3),
- einer in dem Gepäckstückkörper (3) integrierten, als elektronischer tag ausgeführten Displayeinrichtung (32), die eine Anzeigefläche aufweist,
- wobei auf der Anzeigefläche (4) für eine Flug notwendige Flug- und Personendaten anzeigbar sind,
wobei die Anzeigefläche (4) eine Länge (A) zwischen 160 und 200 mm und eine Breite (B) zwischen 38 und 60 mm aufweist.

2. Gepäckstück (1) nach Anspruch 1, **dadurch gekennzeichnet, dass** die in den Gepäckstückkörper (3) integrierte Displayeinrichtung (32) vorzugsweise eine Länge (c) zwischen 160 und 300 mm und eine Breite (E) von 38 und 90 mm aufweist.

3. Gepäckstück (1) nach Anspruch 1 oder 2, **dadurch gekennzeichnet, dass** der Gepäckstückkörper (3) zwei Längsseiten (12), zwei Hauptseiten (8) sowie eine Ober- und eine Unterseite (14, 16) aufweist, wobei die Anzeigefläche (4) parallel zu einer der Längs- oder Hauptseiten (12, 8) oder der Ober- oder Unterseite (14, 16) angeordnet ist, wobei die Anzeigefläche (4) gegenüber der Längs- oder Hauptseite (12, 8) oder Ober- oder Unterseite (14, 16) vertieft im dem Gepäckstückkörper (3) angeordnet ist.

4. Gepäckstück (1) nach einem der Ansprüche 1 bis 3, **dadurch gekennzeichnet, dass** auf der Anzeigefläche (4) zwei Strichcodes (22) mit unterschiedlicher Ausrichtung anzeigbar sind.

5. Gepäckstück (1) nach Anspruch 4, **dadurch gekennzeichnet, dass** die Strichcodes (22) in Längsrichtung der Anzeigefläche nebeneinander anzeigbar sind.

6. Gepäckstück (1) nach einem der Ansprüche 1 bis 5, **dadurch gekennzeichnet, dass** die Displayeinrichtung (32) in einem einer Wanne ähnlichen Aufnahmeelement (30) angeordnet ist.

7. Gepäckstück (1) nach einem der Ansprüche 1 bis 6, **dadurch gekennzeichnet, dass** die Displayeinrichtung (32) eine Dicke zwischen 7mm und 40mm aufweist.

8. Gepäckstück (1) nach einem der Ansprüche 1 bis 7, **dadurch gekennzeichnet, dass** die Displayeinrichtung (32) an einer der Längsseiten (12) des Gepäckstückkörpers (3) angeordnet ist.

9. Gepäckstück (1) nach einem der Ansprüche 1 bis 8, **dadurch gekennzeichnet, dass** die Displayeinrichtung (32) ein stromloses Display aufweist, wobei das stromlose Display vorzugsweise ein bi-stabiles Display ist.

10. Gepäckstück (1) nach einem der Ansprüche 1 bis 9, **dadurch gekennzeichnet, dass** die Displayeinrichtung (32) ein Gehäuse (44) und Schutzschicht (38) sowie ein Display (62) aufweist, wobei das Display (62) im Inneren des Gehäuses (44) angeordnet ist und durch die Schutzschicht (38) geschützt ist.

11. Gepäckstück (1) nach einem der Ansprüche 1 bis 10, **dadurch gekennzeichnet, dass** auf der Displayeinrichtung (32) zwei zueinander mit gegenseitigem Abstand parallele grüne Streifen in definierten Abschnitten auf der Anzeigefläche (4) anzeigbar sind.

12. Gepäckstück (1) nach Anspruch 11, **dadurch gekennzeichnet, dass** grüne Farbe und/oder grünes Material (40, 42) auf oder in dem Display (62) und/oder auf oder in der Schutzschicht (38) angeordnet ist, wobei die Displayeinrichtung (32) einen ersten und einen zweiten Betriebszustand aufweist, wobei in dem ersten Betriebszustand die grünen Streifen sichtbar und in dem zweiten Betriebszustand die grünen Streifen nicht sichtbar sind.

13. Gepäckstück nach Anspruch 11 oder 12, **dadurch gekennzeichnet, dass** die grünen Streifen jeweils eine derartige Länge aufweisen, dass sie nicht in den Bereichen anordbar sind, in denen die Strichcodes (22) auf der Anzeigefläche (4) dargestellt sind.

14. Verfahren zum Betreiben einer Displayeinrichtung (32) eines Gepäckstücks (1), das einen Gepäckstückkörper (3) und eine in dem Gepäckstückkörper (3) integrierte, als elektronischer tag ausgeführte Displayeinrichtung (32), aufweist, wobei auf einer Anzeigefläche (4) der Displayeinrichtung (32) für einen Flug notwendige Flug- und Personendaten angezeigt werden können, wobei dass die die Anzeigefläche (4) in Längsrichtung eine Länge (A) zwischen 160 und 200 mm und Querrichtung eine Breite (B) zwischen 38 und 60 mm aufweist, wobei zwei Strichcodes (22) in unterschiedlicher Ausrichtung auf der Anzeigefläche angezeigt werden.

15. Verfahren nach Anspruch 14, **dadurch gekennzeichnet, dass**
- in einem ersten Betriebszustand grüne Streifen in der Anzeigefläche (4) der Displayeinrichtung (32) angezeigt werden und
- in einem zweiten Betriebszustand keine grüne Streifen in der Anzeigefläche (4) der Displayeinrichtung (32) angezeigt werden.

## Claims

1. A piece of baggage (1) including
- a body (3) of the piece of baggage,
- a display means (32) integrated in said body (3) of the piece of baggage and configured as an electronic tag and comprising an indicating area,
- wherein flight and personal data required for a flight are adapted to be indicated in said indicating area (4),
wherein
said indicating area (4) has a length (A) ranging between 160 and 200 mm and a width (B) ranging between 38 and 60 mm.

2. The piece of baggage (1) according to claim 1, **characterized in that** the display means (32) integrated in the body (3) of the piece of baggage preferably has a length (C) ranging between 160 and 300 mm and a width (E) ranging between 38 and 90 mm.

3. The piece of baggage (1) according to claim 1 or 2, **characterized in that** the body (3) of the piece of baggage comprises two longitudinal sides (12), two main sides (8) as well as an upper and a lower side (14, 16), wherein the indicating area (4) is arranged in parallel to one of the longitudinal or main sides (12, 8) or the upper or lower side (14, 16), wherein the indicating area (4) is depressed relative to the longitudinal or main side (12, 8) or the upper or lower side (14, 16) in the body (3) of the piece of baggage.

4. The piece of baggage (1) according to any one of claims 1 to 3, **characterized in that** in the indicating area (4) two bar codes (22) of different orientation are adapted to be indicated.

5. The piece of baggage (1) according to claim 4, **characterized in that** the bar codes (22) are adapted to be indicated side by side in the longitudinal direction of the indicating area

6. The piece of baggage (1) according to any one of claims 1 to 5, **characterized in that** the display means (32) is arranged in a well-type take-up element (30).

7. The piece of baggage (1) according to any one of claims 1 to 6, **characterized in that** the display means (32) has a thickness ranging between 7 mm and 40 mm.

8. The piece of baggage (1) according to any one of claims 1 to 7, **characterized in that** the display means (32) is arranged at one of the longitudinal sides (12) of the body (3) of the piece of baggage.

9. The piece of baggage (1) according to any one of claims 1 to 8, **characterized in that** the display means (32) comprises a currentless display, wherein the currentless display preferably is a bistable display.

10. The piece of baggage (1) according to any one of claims 1 to 9, **characterized in that** the display means (32) comprises a housing (44) and a protective layer (38) as well as a display (62), wherein said display (62) is arranged inside said housing (44) and is protected by said protective layer (38).

11. The piece of baggage (1) according to any one of claims 1 to 10, **characterized in that** at the display means (32) two green strips arranged in parallel at a distance to each other are adapted to be indicated in defined sections in the indicating area (4).

12. The piece of baggage (1) according to claim 11, **characterized in that** green color and/or green material (40, 42) are arranged on or in the display (62) and/or on or in the protective layer (38), wherein the display means (32) comprises a first and a second operating state, wherein in the first operating state the green strips are visible and in the second operating state the green strips are not visible.

13. The piece of baggage (1) according to claim 11 or 12, **characterized in that** the green strips each have such a length that they are not adapted to be arranged in the regions where the bar codes (22) are represented in the indicating area (4).

14. A method for operating a display means (32) of a piece of baggage (1) which comprises a body (3) of the piece of baggage and a display means (32) integrated in the body (3) of the piece of baggage and configured as an electronic tag, wherein in an indicating area (4) of said display means (32) flight and personal data required for a flight can be indicated,
wherein
in the longitudinal direction said indicating area (4) has a length (A) ranging between 160 and 200 mm and in the transverse direction it has a width (B) ranging between 38 and 60 mm, wherein two bar codes (22) of different orientation are indicated in the indicating area.

15. The method according to claim 14, **characterized in that**
- in a first operating state green strips are indicated in the indicating area (4) of the display means (32), and
- in a second operating state no green strips are indicated in said indicating area (4) of said display means (32).

## Revendications

1. Bagage (1), avec
- un corps de bagage (3),
- un dispositif d'affichage (32) intégré dans le corps de bagage (3), réalisé en tant qu'étiquette électronique, qui présente une surface d'affichage,
- des données de vol et personnelles nécessaires pour un vol pouvant être affichées sur la surface d'affichage (4),
la surface d'affichage (4) présentant une longueur (A) comprise entre 160 et 200 mm et une largeur (B) entre 38 et 60 mm.

2. Bagage (1) selon la revendication 1, **caractérisé en ce que** le dispositif d'affichage (32) intégré dans le corps de bagage (3) présente de préférence une longueur (C) comprise entre 160 et 300 mm et une largeur (E) comprise entre 38 et 90 mm.

3. Bagage (1) selon la revendication 1 ou 2, **caractérisé en ce que** le corps de bagage (3) présente deux côtés longitudinaux (12), deux côtés principaux (8) ainsi qu'un côté supérieur et un côté inférieur (14, 16), la surface d'affichage (4) étant disposée parallèlement à un des côtés longitudinaux ou principaux (12, 8) ou au côté supérieur ou inférieur (14, 16), la surface d'affichage (4) étant, par rapport au côté longitudinal ou principal (12, 8) ou au côté supérieur ou inférieur (14, 16), disposée de façon enfoncée dans le corps de bagage (3).

4. Bagage (1) selon l'une des revendications 1 à 3, **caractérisé en ce que**, sur la surface d'affichage (4), deux codes à barres (22) peuvent être affichés avec une orientation différente.

5. Bagage (1) selon la revendication 4, **caractérisé en ce que** les codes à barres (22) peuvent être affichés de façon juxtaposée dans la direction longitudinale de la surface d'affichage.

6. Bagage (1) selon l'une des revendications 1 à 5, **caractérisé en ce que** le dispositif d'affichage (32) est disposé dans un élément de réception (30) semblable à une cuvette.

7. Bagage (1) selon l'une des revendications 1 à 6, **caractérisé en ce que** le dispositif d'affichage (32) présente une épaisseur comprise entre 7 mm et 40 mm.

8. Bagage (1) selon l'une des revendications 1 à 7, **caractérisé en ce que** le dispositif d'affichage (32) est disposé sur l'un des côtés longitudinaux (12) du corps de bagage (3).

9. Bagage (1) selon l'une des revendications 1 à 8, **caractérisé en ce que** le dispositif d'affichage (32) présente un affichage sans courant, l'affichage sans courant étant de préférence un affichage bistable.

10. Bagage (1) selon l'une des revendications 1 à 9, **caractérisé en ce que** le dispositif d'affichage (32) présente un boîtier (44) et une couche de protection (38) ainsi qu'un affichage (62), l'affichage (62) étant disposé dans l'intérieur du boîtier (44) et étant protégé par la couche de protection (38).

11. Bagage (1) selon l'une des revendications 1 à 10, **caractérisé en ce que**, sur le dispositif d'affichage (32), deux bandes vertes parallèles entre elles à distance l'une de l'autre peuvent être affichées dans des tronçons définis sur la surface d'affichage (4).

12. Bagage (1) selon la revendication 11, **caractérisé en ce que** de la couleur verte et/ou du matériau vert (40, 42) est disposé (e) sur ou dans l'affichage (62) et/ou sur ou dans la couche de protection (38), le dispositif d'affichage (32) présentant un premier et un deuxième état de fonctionnement, les bandes vertes étant visibles dans le premier état de fonctionnement, et les bandes vertes n'étant pas visibles dans le deuxième état de fonctionnement.

13. Bagage (1) selon la revendication 11 ou 12, **caractérisé en ce que** les bandes vertes présentent respectivement une longueur telle qu'elles ne peuvent pas être disposées dans les zones dans lesquelles les codes à barres (22) sont représentés sur la surface d'affichage (4).

14. Procédé de fonctionnement d'un dispositif d'affichage (32) d'un bagage (1) qui présente un corps de bagage (3) et un dispositif d'affichage (32) intégré dans le corps de bagage (3) et réalisé en tant qu'étiquette électronique, des données de vol et personnelles nécessaires pour un vol pouvant être affichées sur une surface d'affichage (4) du dispositif d'affichage (32),
la surface d'affichage (4) présentant dans la direction longitudinale une longueur (A) comprise entre 160 et 200 mm et, dans la direction transversale, une largeur (B) comprise entre 38 et 60 mm, deux codes à barres (22) étant affichés dans une orientation différente sur la surface d'affichage.

15. Procédé selon la revendication 14, **caractérisé en ce que**
- dans un premier état de fonctionnement, des bandes vertes sont affichées dans la surface d'affichage (4) du dispositif d'affichage (32) et
- dans un deuxième état de fonctionnement, aucune bande verte n'est affichée dans la surface d'affichage (4) du dispositif d'affichage (32).
